# EUROPEAN PATENT SPECIFICATION

(11) **EP 3 702 647 B1**
(45) Date of publication and mention of the grant of the patent: **24.08.2022**
(21) Application number: 19159712.9
(22) Date of filing: 27.02.2019
(51) Int. Cl.: F16H 57/025, F16H 57/031, F16H 37/04, F16H 1/46, F03D 15/00, F16H 57/02

(54) **A GEAR SYSTEM**
GETRIEBESYSTEM
SYSTÈME D'ENGRENAGE

(43) Date of publication of application: 02.09.2020
(73) Proprietor: Moventas Gears Oy, 40101 Jyväskylä (FI)
(72) Inventor: KOPONEN, Mikko, FI-40701 JYVÄSKYLÄ (FI); SAASTAMOINEN, Jussi, FI-40701 JYVÄSKYLÄ (FI)
(74) Representative: Väänänen, Janne Kalervo

(56) References cited:
- EP-A1- 2 662 598
- WO-A1-99/25992
- CN-U- 202 510 680
- GB-A- 1 232 244
- US-A1- 2013 178 326

## Description

### Field of the invention

The invention relates generally to gear systems. More particularly, the invention relates to a frame structure of a gear system comprising a planetary gear. Furthermore, the invention relates to a wind power plant comprising such a gear system.

### Background

In many power generating systems, it may be advantageous from the viewpoints of various design and constructional aspects to connect a generator to a prime mover, e.g. a wind turbine, via a gear system arranged to convert the rotational speed of the prime mover into a speed range suitable for the generator. For example, in a wind power plant, a gear system makes it possible to use a generator that is significantly smaller in dimensions and weight than a direct driven generator of a corresponding gearless wind power plant. Correspondingly, in many motor applications it may be advantageous to connect a motor to an actuator via a gear system arranged to convert the rotational speed of the motor into a speed range suitable for the actuator. The gear system may comprise a single gear stage or two or more series connected gear stages with the aid of which a desired gear-ratio is achieved. Each gear stage can be for example a planetary gear, a cylindrical gear, a bevel gear, or some other gear.

Design aspects related to a gear system are, among others, the size and weight of the gear system and the number of components of the gear system. For example, in a wind power application, design aspects of the kind mentioned above must be optimized enough in order that a wind power plant with a gear system would be competitive with a gearless wind power plant having a direct driven generator. The choice whether to use a gear system or to have a gearless design depends on many different aspects many of which are in trade-off with each other. A gear system provides however many advantages and thus there is a need to provide technical solutions for alleviating or even eliminating the drawbacks related to the use of a gear system.

Publication EP2662598 describes a planetary gear that comprises a ring gear, a sun gear, and a planet carrier for driving at least three planet shafts each onto which at least one planet wheel having a radial contact surface and an axial contact surface is rotatably mounted by means of a plain bearing arrangement. The plain bearing arrangement comprises two bushings fixedly connected to the planet shaft, each fixed bushing being L-shaped in cross-section and having a radial contact surface and an axial contact surface. The fixed L-shaped bushings are mounted to form a cross-sectional U-shape and are locked in an axial direction at both outer sides by an abutment. At least a part of the planet wheel is located within the U-shape formed by the fixed L-shaped bushings. The plain bearing arrangement furthermore comprises a radial sliding support in between the radial contact surface of the fixed L-shaped bushings and the radial contact surface of the planet wheel and an axial sliding support in between the axial contact surface of the fixed L-shaped bushings and the axial contact surfaces of the planet wheel.

Publication US2013178326 describes a gear system that comprises at least one planetary gear. Planet wheels are held in a planet carrier of the planetary gear using planetary bolts. After removing a gear ring of the planetary gear and releasing the planetary bolts related to a given planet wheel, the planet wheel under consideration can be removed in a radially outward direction.

### Summary

The following presents a simplified summary in order to provide a basic understanding of the invention as in claim 1 and its preferred embodiments as in the dependent claims.

In this document, the word "geometric" when used as a prefix means a geometric concept that is not necessarily a part of any physical object. The geometric concept can be for example a geometric point, a straight or curved geometric line, a geometric plane, a non-planar geometric surface, a geometric space, or any other geometric entity that is zero, one, two, or three dimensional.

In accordance with the invention, there is provided a new gear system that can be, for example but not necessarily, a gear system of a wind power plant.

5 It is an object of the present invention to provide a gear system with a reduced number of components.

According to the present invention the aforementioned problem is solved by a gear system according to claim 1.

A gear system according to the invention comprises a frame structure comprising connection sections for attaching the frame structure to a mechanical structure external to the gear system, and a planetary gear comprising:
- a sun shaft comprising a sun wheel and being rotatable with respect to the frame structure,
- a gear ring stationary with respect to the frame structure,
- a planet carrier comprising a mechanical interface structure for connecting to a rotating element, e.g. a wind rotor, external to the gear system,
- first and second bearings supporting the planet carrier rotatably with respect to the frame structure, the first bearing being axially between the gear ring and the mechanical interface structure of the planet carrier, and
- planet wheels supported rotatably with respect to the planet carrier and meshing with the sun wheel and with the gear ring,

The frame structure comprises a front cover shield that is a single piece of material, attached to the gear ring, and shaped to constitute a bearing cover for covering and supporting the above-mentioned first bearing, wherein the bearing cover covers the first bearing to be non-seeable when the mechanical interface structure of the planet carrier is viewed axially along an axial direction of the planet carrier. The front cover shield further comprises the above-mentioned connection sections of the frame structure.

As the front cover shield is shaped to act as a bearing cover, there is no need for a separate bearing cover and therefore the number of components of the gear system as well as the number of assembly phases is reduced.

In accordance with a particular embodiment of the invention, there is provided also a new wind power plant that comprises:
- a wind rotor,
- a generator for producing electric power, and
- a gear system according to the invention for transferring mechanical power from the wind rotor to the generator.

The above-mentioned wind rotor is connected in a torque transferring way to the planet carrier of the planetary gear of the gear system, and the frame structure of the gear system is attached to support structures of a nacelle of the wind power plant.

Various exemplifying and non-limiting embodiments of the invention are described in accompanied dependent claims.

Exemplifying and non-limiting embodiments of the invention both as to constructions and to methods of operation, together with additional objects and advantages thereof, will be best understood from the following description of specific exemplifying embodiments when read in conjunction with the accompanying drawings.

The verbs "to comprise" and "to include" are used in this document as open limitations that neither exclude nor require the existence of also un-recited features. The features recited in the accompanied dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments of the invention and their advantages are explained in greater detail below in the sense of examples and with reference to the accompanying drawings, in which:
figures 1a, 1b, and 1c illustrate a gear system according to an exemplifying and non-limiting embodiment, and
figure 2 illustrates a wind power plant according to an exemplifying and non-limiting embodiment.

### Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

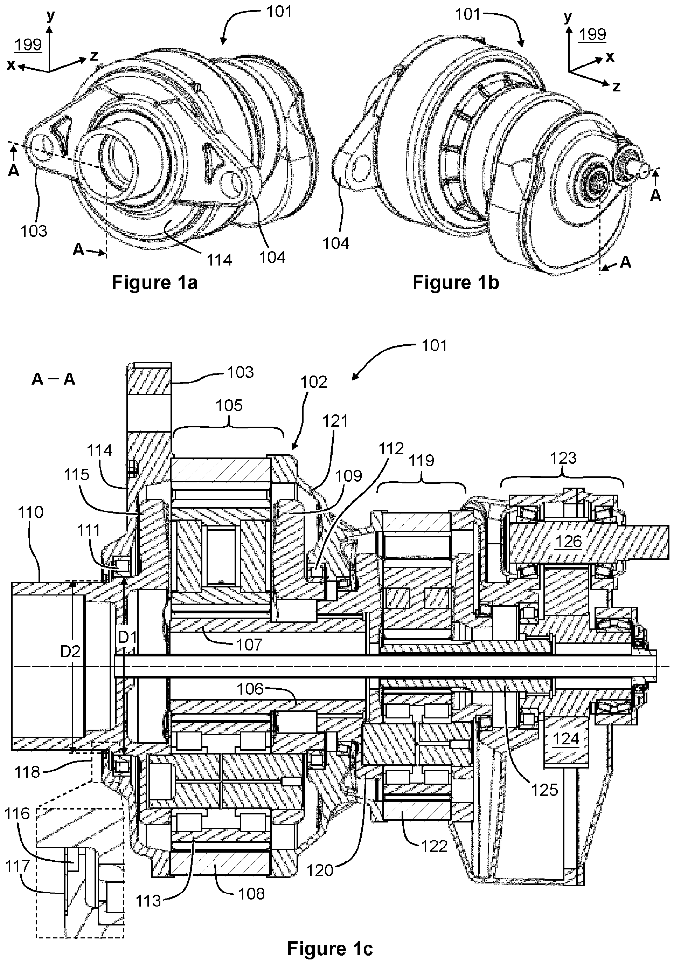

Figures 1a and 1b show a gear system 101 according to an exemplifying and non-limiting embodiment. Figure 1c shows a section taken along polylines A-A shown in figures 1a and 1b. A part of the geometric section surface is parallel with the yzplane of a coordinate system 199 and another part of the geometric section surface is parallel with the xz-plane of the coordinate system 199. The gear system 101 comprises a frame structure 102 that comprises connection sections 103 and 104 for attaching the frame structure 102 to a mechanical structure external to the gear system 101. The connection sections 103 and 104 prevent the frame structure 102 from rotating with respect to the external mechanical structure when the connection sections are attached to the external mechanical structure. The external mechanical structure can be for example a support structure in a nacelle of a wind power plant. In the exemplifying case illustrated in figures 1a-1c, the gear system 101 comprises a first planetary gear 105, a second planetary gear 119, and a cylindrical gear 123. It is however also possible that a gear system according to an exemplifying and non-limiting embodiment comprises a planetary gear only, or only a cylindrical gear in addition to a planetary gear, or some other gear arrangement in addition to a planetary gear.

The planetary gear 105 comprises a sun shaft 106 comprising a sun wheel 107. The sun shaft 106 is rotatable with respect to the frame structure 102. The planetary gear 105 comprises a gear ring 108 that is stationary with respect to the frame structure 102. The planetary gear 105 comprises a planet carrier 109 that comprises a mechanical interface structure 110 for connecting to a rotating element external to the gear system. The external rotating element can be for example a wind turbine. The planet carrier 109 is rotatably supported with respect to the frame structure 102 with the aid of first and second bearings 111 and 112, where the first bearing 111 is axially, i.e. in the axial direction, between the gear ring 108 and the mechanical interface structure 110 of the planet carrier 109 and the second bearing 112 is axially between the first and second planetary gears 105 and 119. In figures 1a-1c, the axial direction is parallel with the z-axis of the coordinate system 199. In this exemplifying case, the first and second bearings 111 and 112 are cylindrical roller bearings. The first bearing 111 can be some other bearing than a cylindrical roller bearing. For example, the first bearing 111 can be a ball bearing or a plain bearing. It is also possible that the first bearing 111 is a tapered roller bearing and the axial clearance of the tapered roller bearing is adjusted with means for adjusting the axial position of the planet carrier 109, where the means are located between the planetary gears 105 and 119. Correspondingly, the second bearing 112 can be some other bearing than a cylindrical roller bearing, e.g. a ball bearing, a plain bearing, or a tapered roller bearing. The first bearing 111 and the second bearing 112 can represent different bearing types. Thus, the invention is not limited to any specific bearing types.

The planetary gear 105 comprises planet wheels supported rotatably with respect to the planet carrier 109 and meshing with the sun wheel 107 and with the gear ring 108. In figure 1c, one of the planet wheels is denoted with a reference 113. The frame structure 102 comprises a front cover shield 114 that is a single piece of material such as e.g. steel or cast iron. The front cover shield 114 is attached to the gear ring 108, and the front cover shield 114 is shaped to constitute a bearing cover for covering and supporting the first bearing 111. The bearing cover covers the first bearing 111 so that the first bearing 111 is not seeable when the mechanical interface structure 110 of the planet carrier is viewed axially along the positive z-direction of the coordinate system 199. As shown in figure 1c, the diameter D1 of a portion of the planet carrier 109 being in contact with the first bearing 111 is greater than the diameter D2 of an aperture of the front cover shield 114 through which the mechanical interface structure 110 of the planet carrier is arranged to protrude. As the front cover shield 114 is shaped to act as the bearing cover, there is no need for a separate bearing cover and therefore the number of components of the gear system as well as the number of assembly phases is reduced.

In the exemplifying gear system 101 illustrated in figures 1a-1c, the mechanical interface structure 110 of the planet carrier 109 and an end-section 115 of the planet carrier constitute a single piece of material. The end-section 115 supports first ends of planet wheel shafts of the planetary gear, and the planet carrier comprises another end-section that supports second ends pf the planet wheel shafts. The arrangement where the mechanical interface structure 110 and the end-section 115 constitute a single piece of material provides a compact and mechanically strong construction.

In the exemplifying gear system 101 illustrated in figures 1a-1c, the gear ring 108 of the planetary gear 105 constitutes a part of the frame structure 102 so that an outer surface of the gear ring 108 constitutes a part of an outer surface of the gear system 101. It is also possible that a frame structure of a gear system according to an exemplifying and non-limiting embodiment constitutes a housing so that a gear ring is inside the housing.

Figure 1c shows a magnification of a part 118 of the section view of the gear system 101. The exemplifying gear system 101 comprises a seal 116 between the outer surface of the mechanical interface structure 110 and a wall of the aperture of the front cover shield 114 through which the mechanical interface structure 110 is arranged to protrude. The seal 116 can be for example a felt seal that is axially supported with a support plate 117. It is also possible that the seal 116 is a flinger ring seal.

The second planetary gear 119 comprises a planet carrier 120 that is connected in a torque transferring way to the sun shaft 106 of the first planetary gear 105. Furthermore, the second planetary gear 119 comprises a gear ring 122, a sun shaft 125 comprising a sun wheel, and planet wheels rotatably supported with respect to the planet carrier 120 and meshing with the gear ring 122 and with the sun wheel of the second planetary gear 119.

In the exemplifying gear system 101 illustrated in figures 1a-1c, the frame structure 102 comprises an intermediate portion 121 connected to the gear ring 108 of the first planetary gear 105 and to the gear ring 122 of the second planetary gear 119. The gear ring 122 of the second planetary gear 119 constitutes a part of the frame structure 102 so that an outer surface of the gear ring 120 of the second planetary gear constitutes a part of the outer surface of the gear system 101.

The cylindrical gear 123 comprises a first gear wheel 124 that is connected in a torque transferring way to the sun shaft 125 of the second planetary gear 119. The cylindrical gear 123 comprises a second gear wheel 126 that can be connected to a device external to the gear system 101. The external device can be for example a generator.

The front cover shield 114 comprises the connection sections 103 and 104 for attaching the frame structure 102 to a mechanical structure external to the gear system 101. In this exemplifying case, the connection sections 103 and 104 are radially protruding projections. It is also possible that both the front cover shield 114 and the intermediate portion 121 comprise connection sections for attaching the frame structure 102 to a mechanical structure external to the gear system.

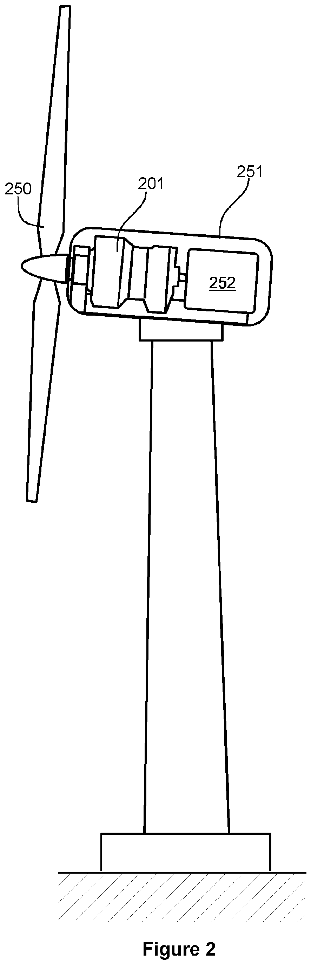

Figure 2 illustrates a wind power plant according to an exemplifying and non-limiting embodiment. The wind power plant comprises a wind rotor 250, a generator 252 for producing electric power, and a gear system 201 for transferring mechanical power from the wind rotor 250 to the generator 252. The gear system 201 can be for example such as the gear system 101 illustrated in figure 1a-1c. The wind rotor 250 is connected in a torque transferring way to the planet carrier of the first planetary gear of the gear system 201, and the frame structure of the gear system 201 is attached to support structures of a nacelle 251 of the wind power plant.

The specific examples provided in the description given above should not be construed as limiting the scope of protection, as defined in the accompanied claims. Lists and groups of examples provided in the description given above are not exhaustive unless otherwise explicitly stated.

## Claims

1. A gear system (101) comprising a frame structure (102) comprising connection sections (103, 104) for attaching the frame structure to a mechanical structure external to the gear system, and a first planetary gear (105) comprising:
- a sun shaft (106) comprising a sun wheel (107) and being rotatable with respect to the frame structure,
- a gear ring (108) stationary with respect to the frame structure,
- a planet carrier (109) comprising a mechanical interface structure (110) for connecting to a rotating element external to the gear system,
- first and second bearings (111, 112) supporting the planet carrier rotatably with respect to the frame structure, and
- planet wheels (113) supported rotatably with respect to the planet carrier and meshing with the sun wheel and with the gear ring,
wherein the first bearing is axially between the gear ring and the mechanical interface structure of the planet carrier, and the frame structure comprises a front cover shield (114) being a single piece of material, attached to the gear ring, and shaped to constitute a bearing cover for covering and supporting the first bearing (111), the bearing cover covering the first bearing to be non-seeable when the mechanical interface structure of the planet carrier is viewed axially along an axial direction of the planet carrier, **characterized in that** the front cover shield (114) comprises the connection sections (103, 104) of the frame structure.

2. A gear system according to claim 1, wherein a diameter (D1) of a portion of the planet carrier being in contact with the first bearing is greater than a diameter (D2) of an aperture of the front cover shield through which the mechanical interface structure (110) of the planet carrier is arranged to protrude.

3. A gear system according to claim 1 or 2, wherein the mechanical interface structure (110) of the planet carrier and an end-section (115) of the planet carrier constitute a single piece of material, the end-section of the planet carrier supporting first ends of planet wheel shafts of the planetary gear and another end-section of the planet carrier supporting second ends of the planet wheel shafts.

4. A gear system according to any of claims 1-3, wherein the gear ring (108) of the first planetary gear constitutes a part of the frame structure so that an outer surface of the gear ring of the first planetary gear constitutes a part of an outer surface of the gear system.

5. A gear system according to any of claims 1-4, wherein the gear system comprises a seal (116) between an outer surface of the mechanical interface structure of the planet carrier and a wall of an aperture of the front cover shield through which the mechanical interface structure of the planet carrier is arranged to protrude.

6. A gear system according to any of claims 1-5, wherein the gear system comprises a second planetary gear (119) whose planet carrier (120) is connected in a torque transferring way to the sun shaft (106) of the first planetary gear.

7. A gear system according to claim 6, wherein the frame structure comprises an intermediate portion (121) connected to the gear ring (108) of the first planetary gear and to a gear ring (122) of the second planetary gear.

8. A gear system according to claim 7, wherein the gear ring of the second planetary gear constitutes a part of the frame structure so that an outer surface of the gear ring of the second planetary gear constitutes a part of an outer surface of the gear system.

9. A gear system according to any of claims 6-8, wherein the gear system comprises a cylindrical gear (123) comprising first and second gear wheels (124, 126) meshing with each other, the first gear wheel (124) being connected in a torque transferring way to a sun shaft (125) of the second planetary gear.

10. A gear system according to any of claims 1-9, wherein the first bearing (111) is one of the following: a cylindrical roller bearing, a ball bearing, a plain bearing, a tapered roller bearing.

11. A wind power plant comprising:
- a wind rotor (250),
- a generator (252) for producing electric power, and
- a gear system (201) according to any of claims 1-10 for transferring mechanical power from the wind rotor to the generator,
wherein the wind rotor is connected in a torque transferring way to the planet carrier of the first planetary gear of the gear system, and the frame structure of the gear system is attached to support structures of a nacelle (251) of the wind power plant.

## Patentansprüche

1. Getriebesystem (101), umfassend eine Rahmenstruktur (102), die Verbindungsabschnitte (103, 104) zum Befestigen der Rahmenstruktur an einer mechanischen Struktur außerhalb des Getriebesystems umfasst, und ein erstes Planetengetriebe (105), umfassend:
- eine Sonnenwelle (106), die ein Sonnenrad (107) umfasst und bezogen auf die Rahmenstruktur drehbar ist,
- einen Getriebering (108), der bezogen auf die Rahmenstruktur feststehend ist,
- einen Planetenträger (109), der eine mechanische Schnittstellenstruktur (110) zum Verbinden mit einem sich drehenden Element außerhalb des Getriebesystems umfasst,
- ein erstes und ein zweites Lager (111, 112), die den Planetenträger bezogen auf die Rahmenstruktur drehbar tragen, und
- Planetenräder (113), die bezogen auf den Planetenträger drehbar getragen werden und mit dem Sonnenrad und mit dem Getriebering in Eingriff stehen,
wobei das erste Lager sich axial zwischen dem Getriebering und der mechanischen Schnittstellenstruktur des Planetenträgers befindet und die Rahmenstruktur ein vorderes Abdeckschild (114) umfasst, das ein einziges Stück Material ist, das an dem Getriebering befestigt und so geformt ist, dass es eine Lagerabdeckung zum Abdecken und Tragen des ersten Lagers (111) bildet, wobei die Lagerabdeckung das erste Lager so abdeckt, dass es nicht sichtbar ist, wenn die mechanische Schnittstellenstruktur des Planetenträgers axial entlang einer Achsrichtung des Planetenträgers betrachtet wird, **dadurch gekennzeichnet, dass** das vordere Abdeckschild (114) die Verbindungsabschnitte (103, 104) der Rahmenstruktur umfasst.

2. Getriebesystem nach Anspruch 1, wobei ein Durchmesser (D1) eines Abschnitts des Planetenträgers, der mit dem ersten Lager in Kontakt steht, größer ist als ein Durchmesser (D2) einer Öffnung des vorderen Abdeckschildes, durch welche die mechanische Schnittstellenstruktur (110) des Planetenträgers hindurchragt.

3. Getriebesystem nach Anspruch 1 oder 2, wobei die mechanische Schnittstellenstruktur (110) des Planetenträgers und ein Endabschnitt (115) des Planetenträgers ein einziges Stück Material bilden, wobei der Endabschnitt des Planetenträgers erste Enden von Planetenradwellen des Planetengetriebes trägt und ein anderer Endabschnitt des Planetenträgers zweite Enden der Planetenradwellen trägt.

4. Getriebesystem nach einem der Ansprüche 1 - 3, wobei der Getriebering (108) des ersten Planetengetriebes einen Teil der Rahmenstruktur bildet, sodass eine Außenfläche des Getrieberings des ersten Planetengetriebes einen Teil einer Außenfläche des Getriebesystems bildet.

5. Getriebesystem nach einem der Ansprüche 1 - 4, wobei das Getriebesystem eine Dichtung (116) zwischen einer Außenfläche der mechanischen Schnittstellenstruktur des Planetenträgers und einer Wand einer Öffnung des vorderen Abdeckschildes, durch welche die mechanische Schnittstellenstruktur des Planetenträgers hindurchragt, umfasst.

6. Getriebesystem nach einem der Ansprüche 1 - 5, wobei das Getriebesystem ein zweites Planetengetriebe (119) umfasst, dessen Planetenträger (120) in einer drehmomentübertragenden Weise mit der Sonnenwelle (106) des ersten Planetengetriebes verbunden ist.

7. Getriebesystem nach Anspruch 6, wobei die Rahmenstruktur einen Zwischenabschnitt (121) umfasst, der mit dem Getriebering (108) des ersten Planetengetriebes und mit einem Getriebering (122) des zweiten Planetengetriebes verbunden ist.

8. Getriebesystem nach Anspruch 7, wobei der Getriebering des zweiten Planetengetriebes einen Teil der Rahmenstruktur bildet, sodass eine Außenfläche des Getrieberings des zweiten Planetengetriebes einen Teil einer Außenfläche des Getriebesystems bildet.

9. Getriebesystem nach einem der Ansprüche 6 - 8, wobei das Getriebesystem ein Zylindergetriebe (123) umfasst, das ein erstes und ein zweites Getrieberad (124, 126) umfasst, die miteinander in Eingriff stehen, wobei das erste Getrieberad (124) in einer drehmomentübertragenden Weise mit einer Sonnenwelle (125) des zweiten Planetengetriebes verbunden ist.

10. Getriebesystem nach einem der Ansprüche 1 - 9, wobei das erste Lager (111) eines aus den folgenden ist: ein Zylinderrollenlager, ein Kugellager, ein Gleitlager, ein Kegelrollenlager.

11. Windkraftanlage, umfassend:
- einen Windrotor (250),
- einen Generator (252) zum Erzeugen elektrischer Energie und
- ein Getriebesystem (201) nach einem der Ansprüche 1 - 10 zum Übertragen mechanischer Energie von dem Windrotor zu dem Generator,
wobei der Windrotor in einer drehmomentübertragenden Weise mit dem Planetenträger des ersten Planetengetriebes des Getriebesystems verbunden ist und die Rahmenstruktur des Getriebesystems an Tragstrukturen einer Gondel (251) der Windkraftanlage befestigt ist.

## Revendications

1. Système d'engrenage (101) comprenant une structure cadre (102) comprenant des sections de connexion (103, 104) pour fixer la structure cadre à une structure mécanique externe au système d'engrenage, et un premier engrenage planétaire (105) comprenant :
- un arbre solaire (106) comprenant une roue solaire (107) et rotatif par rapport à la structure cadre,
- une couronne dentée (108) fixe par rapport à la structure cadre,
- un porte-satellites (109) comprenant une structure d'interface mécanique (110) pour la connexion à un élément rotatif externe au système d'engrenage,
- des premier et second paliers (111, 112) supportant le porte-satellites en rotation par rapport à la structure cadre, et
- des pignons satellites (113) supportés en rotation par rapport au porte-satellites et s'engrenant avec la roue solaire et avec la couronne dentée,
dans lequel le premier palier est axial entre la couronne dentée et la structure d'interface mécanique du porte-satellites, et la structure cadre comprend un blindage de capot avant (114) étant une seule pièce de matériau, fixé à la couronne dentée, et formé pour constituer un capot de palier couvrant et supportant le premier palier (111), le capot de palier couvrant le premier palier étant destiné à ne pas être visible lorsque la structure d'interface mécanique du porte-satellites est vue axialement le long d'une direction axiale du porte-satellites, **caractérisé en ce que** le blindage de capot avant (114) comprend les sections de connexion (103, 104) de la structure cadre.

2. Système d'engrenage selon la revendication 1, dans lequel un diamètre (D1) d'une partie du porte-satellites étant en contact avec le premier palier est plus grand qu'un diamètre (D2) d'une ouverture du blindage de capot avant à travers laquelle la structure d'interface mécanique (110) du porte-satellites est agencée pour faire saillie.

3. Système d'engrenage selon la revendication 1 ou 2, dans lequel la structure d'interface mécanique (110) du porte-satellites et une section d'extrémité (115) du porte-satellites constituent une seule pièce de matériau, la section d'extrémité du porte-satellites supportant des premières extrémités d'arbres de pignons satellites de l'engrenage planétaire et une autre section d'extrémité du porte-satellites supportant des secondes extrémités des arbres de pignons satellites.

4. Système d'engrenage selon l'une quelconque des revendications 1 - 3, dans lequel la couronne dentée (108) du premier engrenage planétaire constitue une partie de la structure cadre de façon à ce qu'une surface extérieure de la couronne dentée du premier engrenage planétaire constitue une partie d'une surface extérieure du système d'engrenage.

5. Système d'engrenage selon l'une quelconque des revendications 1 - 4, dans lequel le système d'engrenage comprend un joint (116) entre une surface extérieure de la structure d'interface mécanique du porte-satellites et une paroi d'une ouverture du blindage de capot avant à travers laquelle la structure d'interface mécanique du porte-satellites est agencée pour faire saillie.

6. Système d'engrenage selon l'une quelconque des revendications 1 - 5, dans lequel le système d'engrenage comprend un second engrenage planétaire (119) dont le porte-satellites (120) est relié d'une manière transférant un couple à l'arbre solaire (106) du premier engrenage planétaire.

7. Système d'engrenage selon la revendication 6, dans lequel la structure cadre comprend une partie intermédiaire (121) reliée à la couronne dentée (108) du premier engrenage planétaire et à une couronne dentée (122) du second engrenage planétaire.

8. Système d'engrenage selon la revendication 7, dans lequel la couronne dentée du second engrenage planétaire constitue une partie de la structure cadre de façon à ce qu'une surface extérieure de la couronne dentée du second engrenage planétaire constitue une partie d'une surface extérieure du système d'engrenage.

9. Système d'engrenage selon l'une quelconque des revendications 6 - 8, dans lequel le système d'engrenage comprend un engrenage cylindrique (123) comprenant des première et seconde roues dentées (124, 126) s'engrenant l'une avec l'autre, la première roue dentée (124) étant reliée d'une manière transférant un couple à un arbre solaire (125) du second engrenage planétaire.

10. Système d'engrenage selon l'une quelconque des revendications 1 - 9, dans lequel le premier palier (111) est l'un des suivants : palier cylindrique à rouleaux, palier à billes, palier lisse, palier conique à rouleaux.

11. Parc d'éoliennes comprenant :
- un rotor éolien (250),
- un générateur (252) pour produire du courant électrique, et
- un système d'engrenage (201) selon l'une quelconque des revendications 1 - 10 pour transférer une puissance mécanique du rotor éolien au générateur,
dans lequel le rotor éolien est relié d'une manière transférant un couple au porte-satellites du premier engrenage planétaire du système d'engrenage, et la structure cadre du système d'engrenage est fixée à des structures de support d'une nacelle (251) du parc éolien.
